# EUROPÄISCHE PATENTSCHRIFT

(11) **EP 2 095 071 B1**
(45) Veröffentlichungstag und Bekanntmachung des Hinweises auf die Patenterteilung: **07.12.2011**
(21) Anmeldenummer: 07818489.2
(22) Anmeldetag: 27.09.2007
(51) Int. Cl.: G01C 9/06

(54) **NEIGUNGSSENSOR MIT OPTOELEKTRONISCHER LIBELLE**
INCLINATION SENSOR WITH OPTOELECTRONIC LEVEL
DETECTEUR D'INCLINAISON A NIVEAU OPTOELECTRONIQUE

(30) Priorität: 28.11.2006 DE 102006056072
(43) Veröffentlichungstag der Anmeldung: 02.09.2009
(73) Patentinhaber: Sartorius Weighing Technology GmbH, 37075 Göttingen (DE)
(72) Erfinder: RÖMHILD, Dieter, 99091 Erfurt (DE); FREYDANK, Gerd, 37081 Göttingen (DE); RINK, Herbert, 37085 Göttingen (DE); BRODERSEN, Olaf, 99099 Erfurt (DE); MÜLLER, Ralf, 09648 Mittweida (DE)
(74) Vertreter: Liedtke, Klaus
(86) Internationale Anmeldenummer: PCT/EP2007/008406
(87) Internationale Veröffentlichungsnummer: WO 2008/064731

(56) Entgegenhaltungen:
- WO-A-2007/059736
- DE-A1- 3 938 848
- DE-A1- 19 854 812
- US-A- 4 164 077
- US-A- 5 794 355

## Beschreibung

Die Erfindung betrifft einen Neigungssensor mit einer Libelle, welche in einem Gehäuse unter einem Deckglas eine Flüssigkeit und eine Gasblase aufweist, wobei oberhalb des Deckglases eine Lichtquelle angeordnet ist.

Zum horizontalen oder vertikalen Ausrichten von Apparaturen wie beispielsweise Messinstrumenten oder Bauwerken werden üblicherweise Libellen eingesetzt. Diese Libellen werden üblicherweise als Röhrenlibellen für eindimensionale Ausrichtung oder als Dosenlibelle für zweidimensionale Ausrichtung ausgeführt. Die Libelle wird so mit der Apparatur verbunden, dass sich ihre Gasblase im ausgerichteten Zustand der Apparatur an einer definierten Stelle der Libelle befindet. Der ausgerichtete Zustand kann mit Hilfe der Libelle mit geringem Aufwand hergestellt oder wiederhergestellt werden. Es muss sich nicht zwangsläufig um einen horizontal oder vertikal ausgerichteten Zustand der Apparatur handeln. Prinzipiell kann durch entsprechend verkippte Anordnung der Libelle an der Apparatur jeder beliebige Neigungswinkel für den ausgerichteten Zustand vorgegeben werden.

Befindet sich die Gasblase an der definierten Stelle, so wird sie im Sinne der Erfindung als zentriert bezeichnet.

Um eine stabile und reproduzierbare Position der Blase in Abhängigkeit vom Verkippungswinkel der Libelle zu erreichen, wird im Stand der Technik die Grenzfläche Deckglas-Flüssigkeit mit einer konkaven Kontur hergestellt. Die Empfindlichkeit der Libelle hängt dann vorrangig vom Krümmungsradius des Deckglases ab.

Im Stand der Technik sind auch bereits Anordnungen bekannt, mit denen Libellen elektronisch abgelesen werden können. Dazu werden in der Regel fotoelektrische Prinzipien herangezogen. Die Mehrzahl der bekannten Anordnungen basiert auf dem Durchleuchten einer Libelle, wobei eine Lichtquelle und ein Lichtempfänger auf gegenüberliegenden Seiten der Libelle, insbesondere auf der Ober- und der Unterseite, angeordnet sind.

Beispielsweise ist in DE 39 38 848 A1 ein Neigungssensor beschrieben, der eine herkömmliche Röhrenlibelle enthält, deren Gehäuse aus einem für Licht durchlässigem Material besteht und deren Innenraum mit einer Flüssigkeit gefüllt ist, die eine Gasblase umschließt. Über der Röhrenlibelle ist eine Lichtquelle angeordnet, die die gesamte Länge der Röhrenlibelle ausleuchtet. Das von der Lichtquelle ausgehende Licht tritt durch das transparente Gehäuse und durch die ebenfalls lichtdurchlässige Flüssigkeit wie auch durch die Gasblase. Auf der der Lichtquelle gegenüber liegenden Seite der Libelle entsteht eine ungleichförmige Lichtverteilung, die auf einem darunter angeordneten Fotodetektor ausgewertet wird. Solche Vorrichtungen sind aufwendig, nehmen einen großen Bauraum ein und erfordern in der Regel speziell aufgebaute Libellen. Nachteilig sind vor allem die geringen Helligkeitsunterschiede des auszuwertenden Lichtflecks infolge der geringen Transmissionsunterschiede von Gasblase und Flüssigkeit sowie die verwaschenen Konturen des Lichtflecks, die durch Reflexions- und Streuerscheinungen an den optischen Grenzflächen verursacht werden. Die Erfassung der Position des Lichtflecks ist deshalb mit großen Unsicherheiten behaftet und erlaubt nur kleine Blasenauslenkungen für eine eindeutige Interpretation der Fotostromsignale.

Nach DE 36 34 244 A1 ist ein optoelektronischer Neigungssensor mit einem Strahlungssender und einem Strahlungsdetektor bekannt, bei dem Strahlungssender und Strahlungsdetektor oberhalb eines lichtreflektierenden Mediums angeordnet sind, wobei die Neigung durch Reflexion an einer lichtreflektierenden Flüssigkeit, vorzugsweise an einem Quecksilberspiegel erfasst wird. Die Flüssigkeit ist in einer Kapselung eingeschlossen, welche von der Flüssigkeit nur teilweise ausgefüllt wird. Die Detektion der Lage einer Gasblase ist mit dieser Anordnung nicht möglich.

Ferner ist aus JP 10 227 635 A ein Neigungssensor bekannt, bei welchem eine Lichtquelle und ein Lichtempfänger auf derselben Seite einer Libelle angeordnet sind, nämlich oberhalb des Deckglases. Dieser Neigungssensor nutzt das Prinzip der Totalreflexion. Wenn die Libelle horizontal ausgerichtet ist, die Gasblase also im Sinne der Erfindung zentriert ist, wird von der Lichtquelle auf die Gasblase fallendes Licht an der Grenzfläche zwischen dem optisch dichteren Deckglas und der optisch dünneren Gasblase in Richtung auf den Lichtempfänger totalreflektiert. Mittels des Lichtempfängers ist das im zentrierten Fall totalreflektierte Licht detektierbar. Ist die Gasblase dezentriert, so findet keine Totalreflexion und somit kein Lichteinfall auf den Lichtempfänger statt. Es kann somit anhand des detektierbaren Lichtes festgestellt werden, ob die Gasblase zentriert ist oder nicht. Dies dient als binäre Aussage über eine horizontale, vertikale oder eine andere vorbestimmte Ausrichtung einer Apparatur.
Dieser Neigungssensor hat den Nachteil, dass die Richtung und der Grad der Neigung nicht ermittelt werden kann. Eine automatische Ausrichtung einer mit einem solchen Neigungssensor versehenen Apparatur ist nicht möglich. Ferner ist nachteilig, dass der Anteil der Totalreflexion nur wirksam ist bei ausreichend großen Abständen zwischen Lichtemitter und Detektor, was zu großen und damit teuren Sensoren führt. In Abhängigkeit von den Abmessungen der Libelle und dem gewünschten Aussteuerbereich (Kippwinkel) kann die Nutzung der Totalreflexion an der Berührungsfläche Blase-Glas sogar unwirksam werden.

Die DE19854812 und die US4164077 offenbaren weitere Beispiele für bekannte optoelektronische Neigungssensoren.

Die nach dem Prioritätsdatum der Erfindung veröffentlichte WO2007/059736 offenbart einen Neigungssensor nach dem Oberbegriff des Anspruchs 1, bei dem auf der Seite der Lichtquelle oberhalb des Deckglases mindestens zwei Lichtempfänger so auf einem Chipsubstrat angeordnet sind, dass von der Lichtquelle ausgehendes und bei zentrierter Gasblase and der Gasblase totalreflektiertes Licht detektierbar ist.

Der Erfindung liegt die Aufgabe zugrunde, einen Neigungssensor der eingangs genannten Art anzugeben, mit dem Richtung und Grad einer Neigung mit hoher Genauigkeit ermittelbar sind, und der für eine automatische Ausrichtung einer mit einem solchen Neigungssensor versehenen Apparatur geeignet ist.

Erfindungsgemäß wird die Aufgabe mit einer Anordnung gelöst, welche die im Anspruch 1 angegebenen Merkmale enthält.

Vorteilhafte Ausgestaltungen sind in den Unteransprüchen angegeben. Gegenstand der Anmeldung sind auch Merkmalskombinationen bei denen die in den Ansprüchen angegebenen Einzelmerkmale beliebig miteinander kombiniert werden.

Die Funktionsweise der erfindungsgemäßen Anordnung beruht auf dem Nachweis der durch die Blasenverlagerung infolge Fresnel-Reflexion und/oder Streulichtgeneration an der optisch glatten oder mikrorauen Berührungsfläche Gasblase-Deckglasunterseite veränderten Lichtverteilung.

Eine effektive Maßnahme zur wirksamen Erhöhung des von der Berührungsfläche Gasblase-Glas remittierten Lichtanteils ist die mikroraue Oberflächenbearbeitung, ähnlich einer Mattscheibe. Eine mikroraue Oberfläche im Sinne der Erfindung liegt dann vor, wenn die effektive Rauhtiefe größer als 1 µm ist und durch übliche Verfahren wie Schleifen, Sandstrahlen oder Ätzen erzeugt werden kann. Außerhalb der Berührungsfläche Gasblase-Glas ist die Brechzahldifferenz Glas-Flüssigkeit im allgmeinen so klein, dass der "Mattscheibeneffekt" verschwindet und keine signifikanten Streulichtanteile generiert werden.
Die Mikrorauhigkeit der Deckglasunterseite hat verbunden mit der erfindungsgemäßen Anordnung folgende bedeutende Vorteile:
■ Die lateralen Sensorabrriessungen und die damit verbundenen Herstellkosten können drastisch reduziert werden
■ Die Streulichterzeugung findet im Gegensatz zur Totalreflexion auch im Bereich der höchsten Helligkeit der Lichtquelle statt. Dadurch werden ein sehr gutes Signal-Rausch-Verhältnis und eine hohe Nachweisempfindlichkeit erreicht.
■ Der unerwünschte Einfluß von Temperaturänderungen auf die Reproduzierbarkeit der Neigungsmessung wird im Vergleich zum Totakeflexionsverfahren gem. JP 10 227 635 A stark reduziert, da die relative Änderung der lichtemittierenden Berührungsfläche Gasblase-Deckglas infolge einer Temperaturvariation immer kleiner sein wird als die relative Änderung des totalreflektierten Lichts, das von einem ring- bzw. streifenförmigen Gebiet am äußeren Umfang der genannten Berührungsfläche ausgeht.
■ Von der Lichtquelle kommende Lichtanteile, die durch die Berührungsfläche Glas-Gasblase vorwärts transmittiert werden, werden an der kugelförmigen Innenfläche der Gasblase ähnlich der Wirkungsweise der bekannten Ulbricht-Kugel reflektiert und tragen somit zusätzlich zur Streulichterzeugung an der mikrorauen Grenzfläche Blase-Glas bei.

Eine vorteilhafte Ausgestaltung sieht vor, dass zur Unterdrückung des störenden Streulichts von den Libellenwänden das Gehäuse auf der Innenseite eine lichtabsorbierende Oberfläche aufweist.

Für Anwendungen, bei denen monochromatisches Licht verwendet wird, ist die Verwendung einer bei der Arbeitswellenlänge absorbierenden Flüssigkeit eine hocheffektive Lösung. Falls die Flüssigkeit selbst nicht oder nicht ausreichend absorbierend ist, können geeignete hochabsorbierende Farbstoffe verwendet werden. Vorteilhaft wirkt sich dabei die Tatsache aus, dass die wirksamen Absorptionslängen in der Libelle durch Hin- und Rücklauf verdoppelt werden.

Da ein Brechzahlunterschied zwischen Libellenglas und Flüssigkeit im Sinne der Erfindung immer kontraproduktiv ist, wird eine möglichst hohe Übereinstimmung der Brechzahlen von Libellenglas und Flüssigkeit angestrebt. Möglichkeiten bestehen beispielsweise in der Wahl des Werkstoffes (Glas, PMMA, Polycarbonat, ...), aber auch durch die Mischung der Volumenanteile von Flüssigkeiten mit passender Brechzahl. Insbesondere durch die Mischung von Flüssigkeiten kann eine nahezu 100%ige Übereinstimmung erreicht werden. Vorteilhaft kann die Mischung mit der Einfärbung der Flüssigkeit kombiniert werden.

Die Erfindung wird im Folgenden anhand eines Ausführungsbeispieles näher erläutert.

In der zugehörigen Zeichnung zeigen:
- Figur 1: eine Schnittdarstellung einer elektronischen Libelle,
- Figur 2: eine Darstellung der optischen Mechanismen an der elektronischen Libelle,
- Figur 3: die Erläuterung des Streueffektes und die
- Figuren 4 und 5: die Draufsicht auf ein Chipsubstrat.

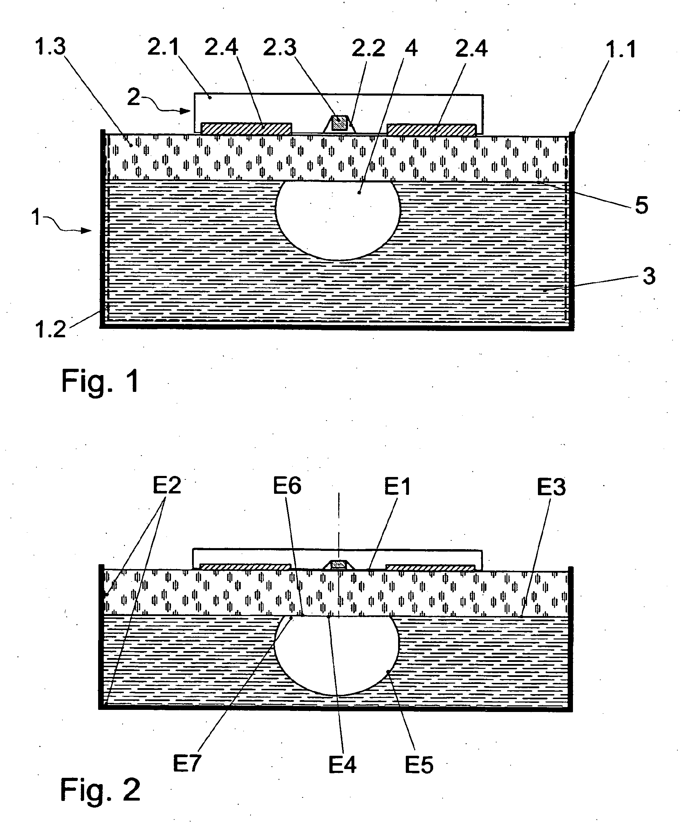

In **Figur 1** ist die Gesamtanordnung schematisch dargestellt. Die Anordnung besteht aus der Libelle 1 und dem Messmodul 2. Die Libelle 1 verfügt über ein Gehäuse 1.1, in dem sich die Flüssigkeit 3 und die Gasblase 4 befinden. Das Gehäuse 1.1 ist innen mit einer lichtabsorbierenden Oberfläche 1.2 versehen. Die Flüssigkeit 3 berührt das Deckglas 1.3 an der Grenzfläche Glas-Flüssigkeit 5.
Im Messmodul 2 sind in einem Chipsubstrat 2.1 die optischen Bauelemente angebracht. Hierzu befindet sich die Lichtquelle 2.3, die vorzugsweise aus einer LED besteht, in einer Vertiefung 2.2. Die Lichtempfänger 2.4 sind in etwa gleichem Abstand von der Lichtquelle entfernt an der Oberfläche des Chipsubstrats 2.1 angeordnet.

**Figur 2** erläutert die optischen Effekte, die die Wirkungsweise des elektronischen Sensors beeinflussen. Hier ist zu unterscheiden zwischen unerwünschten parasitären Effekten und nutzbaren Wirkungen.
Zu den unerwünschten Effekten zählen
- E1:: Direktes optisches Übersprechen zwischen Lichtquelle (LED) und Lichtempfänger (pin-Diode).
- E2:: Reflexion bzw. Remission am Boden, und den Wänden des Libellengefäßes, sowie am Umfang des Deckglases.
- E3:: Fresnel-Reflexion oder Streulichtgeneration an der Grenzfläche Deckglas-Flüssigkeit bei ungleichen Brechzahlen.
Zu den nutzbaren Effekten zählen
- E4:: Fresnel-Reflexion an optisch ebenen und/oder Streulichtgeneration an mikrorauen Grenzflächen Glas-Gasblase.
- E5:: Fresnel-Reflexion an der Innenseite der Gasblase.
- E6:: Totalreflexion an der Grenzfläche Glas-Gasblase bei Überschreiten der Grenzwinkel-Bedingung.
- E7:: Totalreflexion am Meniskus der Gasblase.

Für die vorliegende Erfindung werden die Effekte E4 und E5 nämlich die Fresnel-Reflexion an einer optisch ebenen Grenzfläche und/oder die Streulichtgeneration an mikrorauen Grenzflächen genutzt. Als wirksame Grenzfläche dient die Unterseite des Deckglases 1.3 in dem Bereich, in dem die Gasblase 4 die Unterseite des Deckglases 1.3 berührt.

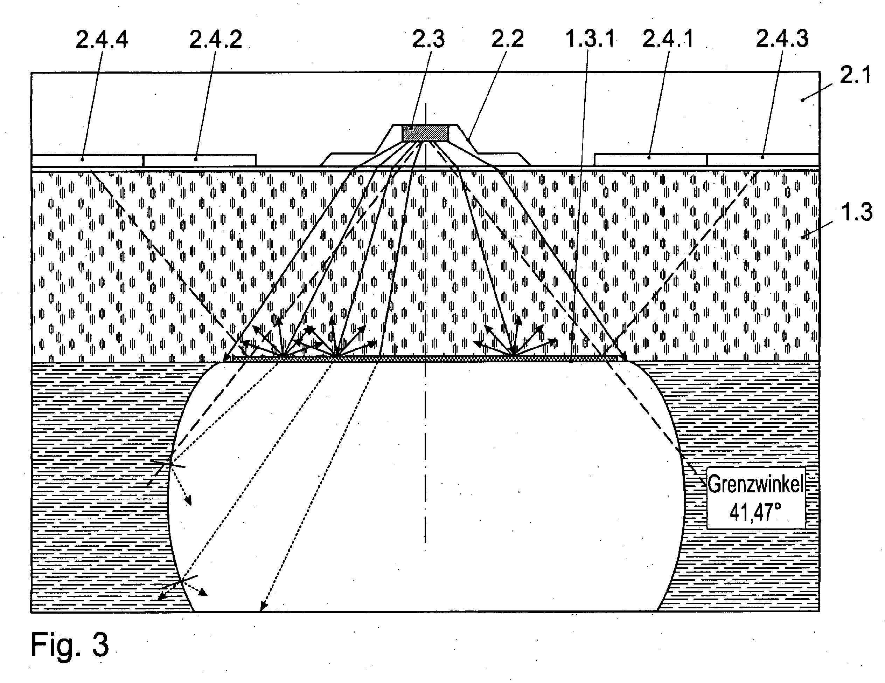

Die **Figur 3** erläutert den an der Unterseite des Deckglases 1.3 auftretenden Streueffekt. Die von der Lichtquelle 2.3 ausgehenden Beleuchtungsstrahlen werden an der Unterseite des Deckglases 1.3 reflektiert. Als Lichtquelle dient hierbei vorzugsweise eine LED. Beleuchtungsstrahlen, die unter einem Winkel auftreffen, der den Grenzwinkel der Totalreflexion unterschreitet, werden diffus reflektiert und erzeugen auf dem Messmodul 2 einen Lichtfleck, der mit hoher Genauigkeit ausgewertet werden kann. Vorteilhaft ist dabei, dass das diffus reflektierte Licht von den Empfängern 2.4.1 und 2.4.2 erfasst werden kann, die relativ nahe an der Lichtquelle 2.3 angeordnet sein können, während das totalreflektierte Licht auf die Lichtempfänger 2.4.3 und 2.4.4 trifft, die weiter außen angeordnet sein müssen. Die Anordnung mit Auswertung der Totalreflexion erfordert deshalb gegenüber einer Anordnung mit Streulichtauswertung größere Abmessungen des Chipsubstrates 2.1 und bedingt deshalb höhere Kosten. Da die Streulichterzeugung im Bereich der höchsten Helligkeit der Lichtquelle 2.3 erfolgt, werden ein sehr gutes Signal-Rausch-Verhältnis und damit eine hohe Nachweisempfindlichkeit erreicht.

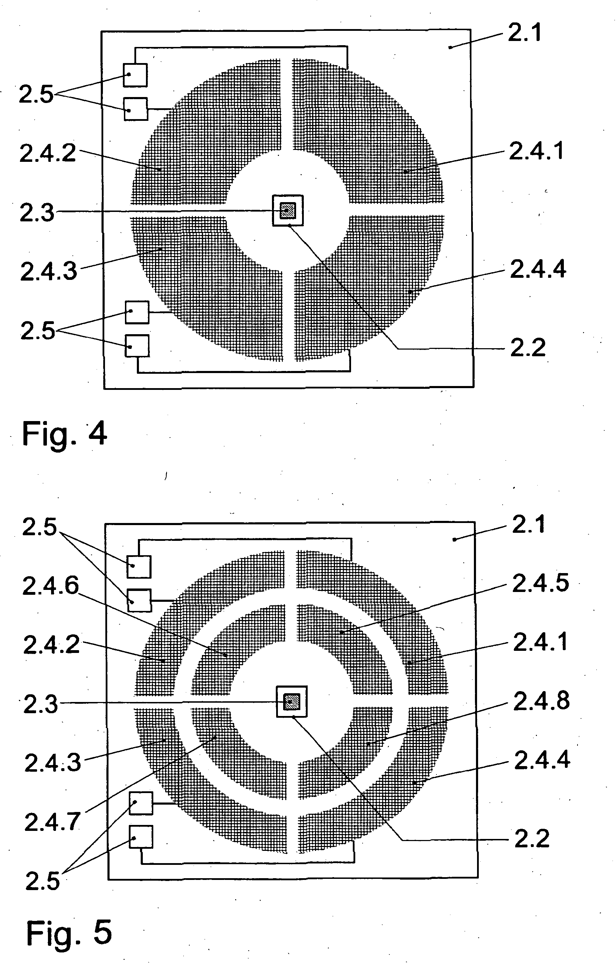

Das Messmodul 2 weist ein Chipsubstrat 2.1 auf. **Figur 4** **zeigt** eine Draufsicht auf die funktionelle Oberseite des Chipsubstrats. Das Chipsubstrat 2.1 ist mit einer Vertiefung 2.2 versehen, in welche eine Lichtquelle 2.3 in Form einer LED und vier Lichtempfänger 2.4.1, 2.4.2, 2.4.3, 2.4.4 in Form von kreisringsegmentförmigen Fotodetektoren im wesentlichen entlang einer Ebene integriert sind. Die Kreisringsegmente decken vier Quadranten eines zweidimensionalen Raumes ab. Die Vertiefungen 2.2 verhindern ein direktes optisches Übersprechen von der Lichtquelle 2.3 zu den Lichtempfängem 2.4. Die elektrischen Leitungen zu den äußeren Anschlüssen 2.5 der Lichtquelle 2.3 und den Lichtempfängern 2.4 sind auf dem Chipsubstrat 2.1 angeordnet und über Anschlussfelder (2.5) mit diesen verbunden. Der Anschluss der Lichtquelle 2.3 ist aus Gründen der Übersichtlichkeit nicht dargestellt.
Das Chipsubstrat 2.1 kann direkt auf das Deckglas 1.3 aufgebracht sein oder mit einem Glassubstrat verkittet sein, das sich zwischen Deckglas 1.3 und Chipsubstrat 2.1 befindet und mit dem Deckglas (1.3) eine optische Einheit bildet.

Bei der in **Figur 5** dargestellten Ausführungsform sind die Lichtempfänger 2.4 in radialer Richtung nochmals unterteil, so dass die Anordnung insgesamt acht einzelnen Segmente 2.4.1 bis 2.4.8 enthält. Damit kann eine weitere Verbesserung der Auflösung erreicht werden.

### BEZUGSZEICHENLISTE

- 1: Libelle
1.1 Gehäuse
1.2 Lichtabsorbierende Oberfläche
1.3 Deckglas
   1.3.1 mikroraue Oberfläche
- 2: Messmodul
2.1 Chipsubstrat
2.2 Vertiefung
2.3 Lichtquelle
2.4 Lichtempfänger
   2.4.1 Erster Lichtempfänger
   2.4.2 Zweiter Lichtempfänger
   2.4.3 Dritter Lichtempfänger
   2.4.4 Vierter Lichtempfänger
2.5 Anschlußfelder
- 3: Flüssigkeit
- 4: Gasblase
- 5: Grenzfläche Glas-Flüssigkeit
- E1: optisches Übersprechen
- E2: Reflexion und Remission an den Innenwänden
- E3: Fresnel-Reflexion oder Streulichtgeneration an der Grenzfläche Glas-Flüssigkeit bei Brechzahldifferenzen
- E4: Fresnel-Reflexion oder Streulichtgeneration an der Grenzfläche Glas-Luft
- E5: Fresnel-Reflexion an der Innenseite der Gasblase
- E6: Totalreflexion an der Grenzfläche Glas-Luft
- E7: Totalreflexion am Meniskus der Gasblase

## Patentansprüche

1. Neigungssensor mit einer Libelle (1), welche in einem Gehäuse (1.1) unter einem Deckglas (1.3) eine Flüssigkeit (3) und eine Gasblase (4) aufweist, wobei oberhalb des Deckglases (1.3) eine Lichtquelle (2.3) angeordnet ist, **dadurch gekennzeichnet, dass** oberhalb des Deckglases (1.3) mindestens vier Lichtempfänger (2.4.1, 2.4.2...2.4.4) so angeordnet sind, dass von der Lichtquelle (2.3) ausgehendes und bei zentrierter Gasblase (4) an der die Gasblase (4) berührenden Fläche des Deckglases (1.3) gestreutes Licht (L) mittels dieser wenigstens vier Lichtempfänger (2.4) detektierbar ist, wobei bei unzentrierter Gasblase (4) mittels dieser Lichtempfänger (2.4.1, 2.4.2...2.4.4) unterschiedliche Lichtmengen detektierbar sind und die Lichtquelle (2.3) und die Lichtempfänger (2.4.1, 2.4.2...2.4.4) auf einem gemeinsamen Chipsubstrat (2.1) angeordnet sind, wobei das Chipsubstrat (2.1) mit seiner funktionellen Seite auf dem Deckglas (1.3) oder auf einem Glassubstrat, das mit dem Deckglas (1.3) eine optische Einheit bildet, angeordnet ist und dass die zum Flüssigkeitsraum zeigende Seite des Deckglases (1.3) eine Mikrorauigkeit aufweist.

2. Neigungssensor nach Anspruch 1, **dadurch gekennzeichnet, dass** die mindestens vier Lichtempfänger (2.4.1, 2.4.2...2.4.4), so um die Lichtquelle (2.3) angeordnet sind, dass von der Lichtquelle (2.3) ausgehendes und bei zentrierter Gasblase (4) an der die Gasblase (4) berührenden Fläche des Deckglases (1.3) reflektiertes Licht (L) mittels dieser wenigstens vier Lichtempfänger (2.4.1, 2.4.2...2.4.4) detektierbar ist.

3. Neigungssensor nach Anspruch 1, **dadurch gekennzeichnet, dass** die Lichtquelle (2.3) bei zentrierter Gasblase (4) zentral über der Gasblase (4) angeordnet ist.

4. Neigungssensor nach einem der vorhergehenden Ansprüche, **dadurch gekennzeichnet, dass** die Lichtempfänger (2.4.1, 2.4.2... 2.4.4) in einer zum Deckglas (1.3) parallelen Ebene entlang jeweils einer virtuellen, durch die Lichtquelle (2.3) und zwischen den betreffenden Lichtempfängern (2.4.1, 2.42...2.4.4) verlaufenden Linie segmentiert sind, wobei gestreutes Licht mittels dieser Segmente unabhängig von den jeweiligen anderen Segmenten detektierbar ist.

5. Neigungssensor nach einem der vorhergehenden Ansprüche, **dadurch gekennzeichnet, dass** das Gehäuse (1.1) auf der Innenseite eine lichtabsorbierende Oberfläche (1.2) aufweist.

6. Neigungssensor nach einem der vorhergehenden Ansprüche, **dadurch gekennzeichnet, dass** die Lichtquelle (2.3) monochromatisches Licht aussendet und eine Libellenflüssigkeit verwendet wird, welche Licht dieser Wellenlänge absorbiert.

7. Neigungssensor nach Anspruch 6, **dadurch gekennzeichnet, dass** die Flüssigkeit mit Farbstoffen versehen ist, welche eine Absorption im Wellenlängenbereich der Lichtquelle (2.3) bewirkt.

8. Neigungssensor nach einem der vorhergehenden Ansprüche, **dadurch gekennzeichnet, dass** zur Verringerung des Brechzahlunterschieds zwischen Deckglas (1.3) und Flüssigkeit (3) für das Deckglas (1.3) Werkstoffe eingesetzt werden, die der Brechzahl der Flüssigkeit (1.3) angenähert sind.

9. Neigungssensor nach einem der vorhergehenden Ansprüche, **dadurch gekennzeichnet, dass** zur Verringerung des Brechzahlunterschieds zwischen Deckglas (1.3) und Flüssigkeit (3) die Brechzahl der Flüssigkeit (3) durch die Mischung der Volumenanteile von verschiedenen Flüssigkeiten angepasst wird.

## Claims

1. Tilt sensor with a level (1), which, in a casing (1.1) under a cover glass (1.3), presents a liquid (3) and a gas bubble (4), while, a light source (2.3) is arranged above the cover glass (1.3), **characterized in that**, above the cover glass (1.3), at least four optical receivers (2.4.1, 2.4.2...2.4.4) are arranged such that light (L) emitted from the light source (2.3) and scattered at the face of the cover glass (1.3) touching the gas bubble (4), when the gas bubble (4) is centred, is detectable using these at least four optical receivers (2.4), while different light quantities are detectable using these optical receivers (2.4.1, 2.4.2...2.4.4) when the gas bubble (4) is not centred, and the light source (2.3) and the optical receivers (2.4.1, 2.4.2...2.4.4) are arranged on a common chip substrate (2.1), while the chip substrate (2.1) is arranged, with its functional side, on the cover glass (1.3) or on a glass substrate which forms an optical unit with the cover glass (1.3), and **in that** the side of the cover glass (1.3), which faces the liquid room, presents a microroughness.

2. Tilt sensor as claimed in claim 1, **characterized in that** at least four optical receivers (2.4.1, 2.4.2...2.4.4) are arranged around the light source (2.3) such that light (L) emitted from the light source (2.3) and reflected at the face of the cover glass (1.3) touching the gas bubble (4), when the gas bubble (4) is centred, is detectable using these at least four optical receivers (2.4.1, 2.4.2...2.4.4).

3. Tilt sensor as claimed in claim 1, **characterized in that** the light source (2.3) is arranged centrally above the gas bubble (4) when the gas bubble is centred.

4. Tilt sensor as claimed in any foregoing claim, **characterized in that** the optical receivers (2.4.1, 2.4.2...2.4.4) are segmented in a plane parallel to the cover glass (1.3) along each one virtual line running through the light source (2.3) and between the optical receivers concerned (2.4.1, 2.4.2...2.4.4), while scattered light is detectable using these segments independently of the corresponding other segments.

5. Tilt sensor as claimed in any foregoing claim, **characterized in that** the casing (1.1) presents a light-absorbing surface (1.2) on the inside.

6. Tilt sensor as claimed in any foregoing claim, **characterized in that** the light source (2.3) emits monochromatic light and **in that** a level liquid is used which absorbs light of this wavelength.

7. Tilt sensor as claimed in claim 6, **characterized in that** the liquid is provided with colouring agents which bring about absorption in the wavelength range of the light source (2.3).

8. Tilt sensor as claimed in any foregoing claim, **characterized in that**, to reduce the refractive index difference between cover glass (1.3) and liquid (3), materials are used for the cover glass (1.3) which are approximated to the refractive index of the liquid (1.3).

9. Tilt sensor as claimed in any foregoing claim, **characterized in that**, to reduce the refractive index difference between cover glass (1.3) and liquid (3), the refractive index of the liquid (3) is adapted by the mixture of the volume fractions of different liquids.

## Revendications

1. Détecteur d'inclinaison avec un niveau à bulle (1) comprenant un liquide (3) et une bulle de gaz (4) contenus dans un boîtier (1.1) sous un verre de protection (1.3), une source lumineuse (2.3) étant disposée au-dessus du verre de protection (1.3), **caractérisé en ce qu'**au moins quatre récepteurs de lumière (2.4.1, 2.4.2...2.4.4) sont disposés au-dessus du verre de protection (1.3), de telle manière que la lumière (L) issue de la source lumineuse (2.3) et diffusée à la surface du verre de protection (1.3) qui touche à la bulle de gaz (4) lorsque la bulle de gaz (4) est centrée est détectable au moyen de ces quatre récepteurs de lumière (2.4.1, 2.4.2...2.4.4) ou plus, des quantités de lumière différentes étant détectables au moyen de ces récepteurs de lumière (2.4.1, 2.4.2...2.4.4) lorsque la bulle de gaz (4) est décentrée, et la source lumineuse (2.3) et les récepteurs de lumière (2.4.1, 2.4.2...2.4.4) étant disposés sur un substrat (2.1) de puce électronique commun, ledit substrat (2.1) de puce électronique étant disposé par sa face fonctionnelle sur le verre de protection (1.3) ou sur un substrat en verre qui forme une unité optique avec le verre de protection (1.3), et la face du verre de protection (1.3) opposée au compartiment à liquide présentant une microrugosité.

2. Détecteur d'inclinaison selon la revendication 1, **caractérisé en ce que** les quatre récepteurs de lumière (2.4.1, 2.4.2...2.4.4) ou plus sont disposés autour de la source lumineuse (2.3), de telle manière que la lumière (L) issue de la source lumineuse (2.3) et diffusée à la surface du verre de protection (1.3) qui touche à la bulle de gaz (4) lorsque la bulle de gaz (4) est centrée est détectable au moyen de ces quatre récepteurs de lumière (2.4.1, 2.4.2...2.4.4) ou plus.

3. Détecteur d'inclinaison selon la revendication 1, **caractérisé en ce que** la source lumineuse (2.3) est disposée centralement au-dessus de la bulle de gaz (4) lorsque ladite bulle de gaz (4) est centrée.

4. Détecteur d'inclinaison selon l'une des revendications précédentes, **caractérisé en ce que** les récepteurs de lumière (2.4.1, 2.4.2...2.4.4) sont segmentés sur un plan parallèle au verre de protection (1.3) le long d'une ligne virtuelle respective passant par la source lumineuse (2.3) et entre les récepteurs de lumière (2.4.1, 2.4.2...2.4.4) concernés, la lumière diffusée étant détectable au moyen de chacun de ces segments, indépendamment des autres segments.

5. Détecteur d'inclinaison selon l'une des revendications précédentes, **caractérisé en ce que** le boîtier (1.1) présente une surface d'absorption lumineuse (1.2) sur sa face intérieure.

6. Détecteur d'inclinaison selon l'une des revendications précédentes, **caractérisé en ce que** la source lumineuse (2.3) émet une lumière monochromatique, et **en ce qu'**il est recouru à un liquide de niveau à bulle qui absorbe la lumière de cette longueur d'onde.

7. Détecteur d'inclinaison selon la revendication 6, **caractérisé en ce que** le liquide est doté de colorants qui entraînent une absorption dans la plage de longueur d'onde de la source lumineuse (2.3).

8. Détecteur d'inclinaison selon l'une des revendications précédentes, **caractérisé en ce que**, pour réduire le différentiel d'indice de réfraction entre le verre de protection (1.3) et le liquide (3), des matières proches de l'indice de réfraction du liquide (1.3) sont utilisées pour le verre de protection (1.3).

9. Détecteur d'inclinaison selon l'une des revendications précédentes, **caractérisé en ce que**, pour réduire le différentiel d'indice de réfraction entre le verre de protection (1.3) et le liquide (3), l'indice de réfraction du liquide (3) est ajusté par mélange de parts volumiques de différents liquides.
